# EUROPÄISCHE PATENTANMELDUNG

(11) **EP 2 796 908 A1**
(43) Veröffentlichungstag der Anmeldung: **29.10.2014**
(21) Anmeldenummer: 13165066.5
(22) Anmeldetag: 24.04.2013
(51) Int. Cl.: G02B 6/38

(54) **Optische Steckverbindung mit dichter Packung**

(71) Anmelder: Euromicron Werkzeuge GmbH, 35764 Sinn-Fleisbach (DE)
(72) Erfinder: Gräf, Holger, 56479 Rehe (DE); Werner, Christoph, 35649 Bischoffen (DE)
(74) Vertreter: Stolmár & Partner

(57) **Zusammenfassung**

Steckverbindung, insbesondere für optische Stecker, umfassend einen Hauptkörper mit einer Längsachse, der für die Aufnahme einer Ferrule vorgesehen ist, wobei der Hauptkörper einen Verriegelungsarm aufweist, der mit dem Hauptkörper an zumindest einem vorderen Bereich verbunden ist und sich entlang der Längsachse des Hauptkörpers nach hinten erstreckt, ein Verschiebeelement, das in Axialrichtung relativ zum Hauptkörper bewegbar ist und mit dem Verriegelungsarm derart zusammenwirkt, dass eine Betätigung des Verschiebeelements den Verriegelungsarm aus der Verriegelung löst, und einen Kabelanschluss, der am Hauptkörper angeordnet ist und der zum befestigen eines Kabels vorgesehen ist, wobei auf der dem Verriegelungsarm gegenüberliegenden Seite im Bereich des Endes des Verriegelungsarms die Steckverbindung zumindest eine Aussparung aufweist, in die zumindest das Ende des Verriegelungsarms einer benachbarten Steckverbindung aufnehmbar ist.

## Beschreibung

### Gebiet der Erfindung

Die Erfindung betrifft eine Steckverbindung, insbesondere für optische Stecker und Doppelstecker, die über- und nebeneinander dicht aneinander anliegend angeordnet werden können.

### Stand der Technik

Grundsätzlich bekannt sind LC-Stecker, die einen schräg nach hinten vorstehenden Verriegelungsarm aufweisen mit zwei seitlichen Verriegelungsvorsprüngen, die in einer entsprechenden Buchse mit komplementären Verriegelungsvorsprüngen in einer Buchse für LC Stecker zusammenwirken. Beim Einstecken wird der elastische Verriegelungsarm leicht nach unten verformt und springt, nachdem er über die Verriegelungswände in der Buchse mit seinen Verriegelungsvorsprüngen geschoben wurde, in seine Ursprungsposition zurück und setzt so den Stecker in der Buchse fest. Um ihn zu öffnen, wird beim herkömmlichen RJ45-Stecker der Verriegelungsarm manuell nach unten gedrückt und so aus der Verriegelung gelöst. Bei gelöster Verriegelung lässt sich der Stecker dann ganz einfach aus der Buchse herausziehen.

Ein Nachteil der herkömmlichen Stecker liegt darin, dass diese für die manuelle Betätigung ausreichend gut zugänglich sein müssen, d.h. voneinander ausreichend entfernt sein müssen, damit der Verriegelungsarm noch manuell heruntergedrückt werden kann. Der freie Verriegelungsarm, der nach oben absteht, kann sich außerdem beim Herausziehen leicht in irgendwelchen Kabeln verfangen, die zu nah an dem Stecker und der Buchse vorbeiführen.

Bei Weiterentwicklungen aus dem Stand der Technik wurde dieses Problem verringert. So zeigt beispielsweise die WO 1609/135787 A1 einen Stecker mit einer Verschiebeeinheit, die den Verriegelungsarm betätigt, wenn sie manuell nach hinten gezogen wird. Bei dieser Ausführungsform hat der Stecker einen Hauptkörper mit einer darin gelagerten Ferrule, wobei der Hauptkörper einen Verriegelungsarm aufweist, der schräg nach hinten absteht. Um den Hauptkörper ist ein Verschiebeelement angeordnet, so dass in der Ruheposition der Verriegelungsarm in der Verriegelungsposition steht, d.h. mit der entsprechenden Verriegelungseinrichtung einer Buchse in Eingriff steht, und wenn er nach hinten gezogen ist, den Verriegelungsarm nach unten drückt. Zwar können so die Steckverbindungen enger aneinander positioniert werden, da der Verriegelungsarm selbst nicht mehr manuell betätigt werden muss, sondern dies durch die Verschiebeeinheit geschieht. Jedoch ist auch bei dieser Ausführungsform, insbesondere bei einer Anordnung von Steckverbindungen übereinander, keine beliebig dichte Packung möglich. Eine weitere sehr ähnliche Ausführungsform ist in der JP 63-184271 A gezeigt.

Die in der US 7,326,075 B1 gezeigte Lösung umfasst neben einigen Ausführungsformen, die den oben genannten sehr ähnlich sind, auch einen verschiebbaren Ring, der um ein Kabel herum angeordnet ist und mit dem Verriegelungsarm, der als langer bogenförmiger Steg ausgebildet ist, einstückig verbunden ist. Beim Ziehen an dem Verschiebering wird der Verriegelungsarm gelöst und der Stecker kann aus der Buchse herausgezogen werden. Diese Lösung kann zwar ziemlich dicht gepackt werden, jedoch ist der Stecker selbst nicht besonders stabil in der Konstruktion und aufgrund der luftigen Bauart auch gefährdet, um mit anderen Steckerteilen sich zu verfangen. Außerdem kann aufgrund der dünnen Bauweise der Verschleiß dazu führen, dass der Verriegelungsarm bzw. der Ring einreißt oder bricht.

### Zusammenfassung der Erfindung

Aufgabe der vorliegenden Erfindung ist es daher, eine stabile, insbesondere optische Steckverbindung bereitzustellen, die möglichst dicht gepackt werden kann, gleichzeitig aber auch ein manuelles Öffnen des Verriegelungsmechanismus problemlos ermöglicht.

Diese Aufgabe wird gelöst durch eine Steckverbindung mit den Merkmalen nach Anspruch 1.

Eine solche Steckverbindung, insbesondere für optische Stecker, umfasst einen Hauptkörper mit einer Längsachse, der für die Aufnahme einer Ferrule vorgesehen ist, wobei der Hauptkörper einen Verriegelungsarm aufweist, der mit dem Hauptkörper an zumindest einem vorderen Bereich verbunden ist und sich entlang der Längsachse nach hinten erstreckt, einen Kabelanschluss, ein Verschiebeelement, das in Axialrichtung relativ zum Hauptkörper bewegbar ist und mit dem Verriegelungsarm derart zusammenwirkt, dass eine Betätigung des Verschiebeelements den Verriegelungsarm aus der Verriegelung löst, wobei die Steckverbindung, insbesondere der Hauptkörper und/oder der Ferrulenhalter, auf der dem Verriegelungsarm gegenüberliegenden Seite im Bereich des abstehenden Endes des Verriegelungsarms zumindest eine Aussparung aufweist, in die zumindest das Ende des Verriegelungsarms einer benachbarten Steckverbindung aufnehmbar ist. Dadurch, dass der Verriegelungsarm in die Aussparung des Hauptkörpers und/oder des Verschiebeelements aufnehmbar ist, können die Steckverbindungen direkt aufeinander gestapelt werden und somit sehr eng beieinander in eine jeweilige Buchse eingesteckt werden. Gleichzeitig kann aber auch jede Steckverbindung einzeln aus der Buchse herausgenommen werden. Durch die Aussparung zur Aufnahme des Verriegelungsarms ist es ferner möglich, dass der Verriegelungsarm in einer Verriegelungsstellung verbleiben kann, obwohl direkt über ihm eine weitere Steckverbindung vorhanden ist.

Vorzugsweise umschließt das Verschiebeelement den Hauptkörper in Umfangsrichtung zumindest teilweise. Insbesondere können auch Gleitschienen (bspw. als Aussparungen in Axialrichtung) im Hauptkörper der Steckverbindung vorgesehen sein, in denen das Verschiebeelement gleiten kann und geführt wird. Wenn das Verschiebeelement den Hauptkörper zumindest teilweise umschließt, sind eine stabile Konstruktion und ein zuverlässiges Bewegen des Verschiebeelements am Hauptkörper bereitgestellt.

Die Steckverbindung kann derart ausgebildet sein, dass das Verschiebeelement eine Vielzahl von Hauptkörpern, insbesondere 2 nebeneinander, aufnimmt. Somit können diese Steckverbindungen alle gleichzeitig eingesteckt und entriegelt werden und kann die Installation einer Vielzahl von Steckverbindungen erleichtern.

Das Verschiebeelement kann einen Bügel aufweisen oder zumindest einen Vorsprung, der mit dem Ende des Verriegelungsarms bevorzugt direkt zusammenwirkt. Insbesondere verschiebt der Bügel den Verriegelungsarm an seinem freien Ende zum Hauptkörper hin. Eine solche Ausgestaltung stellt ein zuverlässiges Entriegeln des Verriegelungsarms sicher.

Das Ende des Verriegelungsarms, das nicht mit dem Hauptkörper verbunden ist, weist auf der Oberseite einen nach oben verlaufenden Radius auf, der mit dem Verschiebeelement zusammenwirkt. Durch die radiale Ausgestaltung des Verriegelungsarms wird das Herunterdrücken des Verriegelungsarms verbessert und damit das Entriegeln stark vereinfacht. Gleichzeitig stellt der Radius aber auch sicher, dass beim Ver- und Entriegeln des Verriegelungsarms sich das Verschiebeelement nicht verkantet.

Der Verriegelungsarm ist vorzugsweise elastisch ausgebildet, so dass er ohne Einwirkung äußerer Kräfte in seine Verriegelungsposition zurückkehrt. Zusätzliche Bauteile, wie eine Feder, werden dadurch unnötig. Insbesondere kann der Verriegelungsarm auch das Verschiebeelement in seine Verriegelungsposition zurückziehen (die Position, die das Verschiebeelement in der verriegelten Stellung des Verriegelungsarms hat).

Der Hauptkörper und/oder das Verschiebeelement weisen bevorzugt Anschläge auf, die eine Bewegung entlang der Axialrichtung begrenzt. Ein solcher Anschlag kann beispielsweise durch den Bügel zusammen mit dem Verriegelungsarm ausgestaltet sein. Die Anschläge verhindern, dass sich zum Einen die Bauteile voneinander lösen, oder dass das Verschiebeelement zu weit nach vorne geschoben wird und den Verriegelungsarm oder die Buchse beschädigen kann. Wenn Verriegelungsarm und Verschiebeelement zusammen als Anschlag wirken, kann damit auch ein lösbarer Anschlag ausgeführt werden, und so das Verschiebeelement nach hinten vom Stecker entfernt werden.

Die Aussparung zum Aufnehmen des Verriegelungsarms ist in Längsrichtung vorzugsweise zumindest 1 mm, insbesondere vorne und hinten jeweils 0,5 mm, größer als die Erstreckung in Längsrichtung des Endes des Verriegelungsarms. Dadurch wird gewährleistet, dass der Verriegelungsarm sich nicht aus Versehen oder zufällig an der Unterseite des Hauptkörpers verkantet. Insbesondere kann die Aussparung in Radialrichtung als Loch im Hauptkörper ausgestaltet sein und insbesondere auch der Kabelanschluss dort eine weitere Aussparung aufweisen. So kann möglichst viel Platz für die Aufnahme eines benachbarten Verriegelungsarms geschaffen werden.

### Kurze Beschreibung der Figuren

- Fig. 1: zeigt einen Schnitt von zwei erfindungsgemäßen Steckverbindungen, die in einer Buchse/Kupplung in Verriegelungsposition übereinander angeordnet sind;
- Fig. 2: zeigt den die Steckverbindungen aus Figur 1 in einer einer Draufsicht;

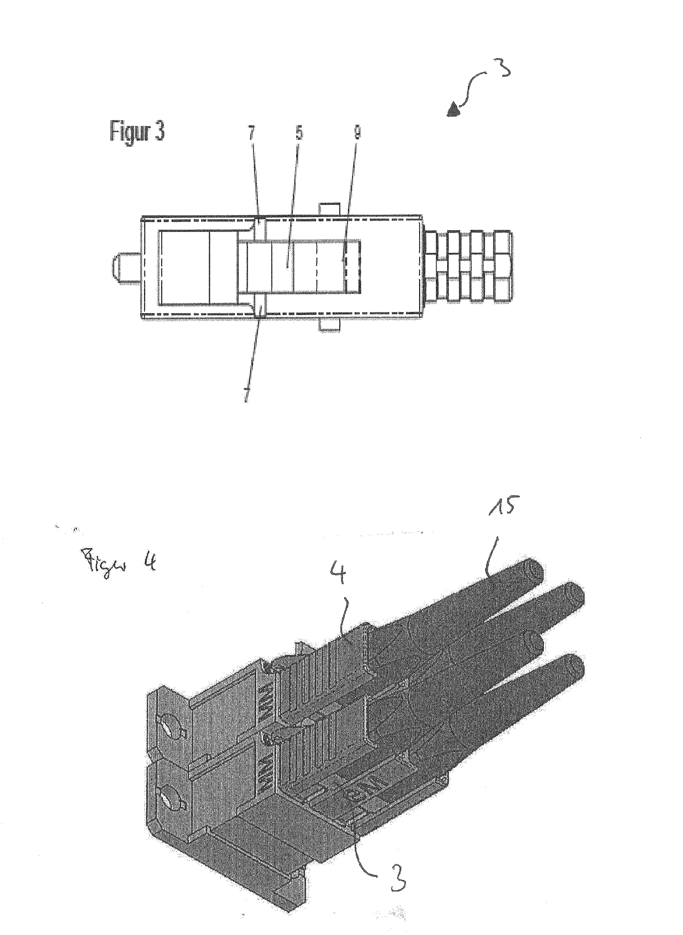

- Fig. 3: zeigt Hauptkörper in einer Draufsicht
- Fig. 4: zeigt eine isometrische Ansicht von schräg unten zweier Doppel-Steckverbindungen, die direkt und spielfrei übereinander montiert sind.

### Bevorzugte Ausführungsform der Erfindung

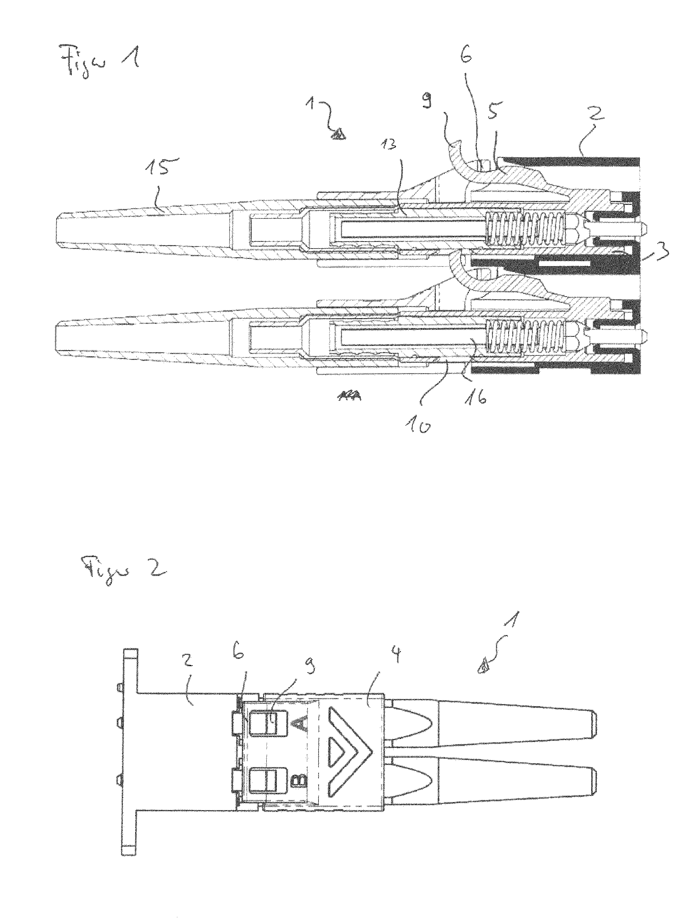

Im Folgenden bezeichnen die Begriffe "oben" und "unten" eine Richtung der Steckverbindung 1, in der der Verriegelungsarm 5 oben und die gegenüberliegende Seite unten ist (so wie in Fig. 1 gezeigt), "vorne" eine Richtung, mit der die Steckverbindung in die Buchse bzw. in eine Kupplung gesteckt wird (auf der rechten Seite in Fig. 1) und "hinten" ist eine Richtung, in der das Kabel mit dem Kabelanschluss 13 verbunden wird (auf der linken Seite in Fig. 1). Ferner bedeutet der Begriff "Axialrichtung" entlang einer Längsachse der Steckverbindung 1, "radial" eine Richtung senkrecht zur Längsachse und "umfänglich" oder "Umfangsrichtung" eine Richtung, die entlang des Umfangs der Steckverbindung 1 verläuft.

Fig. 1 zeigt einen Schnitt durch eine erfindungsgemäße Steckverbindung 1, die direkt über einer zweiten identischen erfindungsgemäßen Steckverbindung in eine Kupplung 2 eingesetzt ist. Die Steckverbindung 1 besteht aus einem Hauptkörper 3, an dessen vorderem Bereich ein Verriegelungsarm 5 angebracht ist, der sich über dem Hauptkörper nach hinten und nach oben erstreckt. Vorzugsweise ist der Verriegelungsarm 5 einstückig mit dem Hauptkörper 3 ausgebildet. In anderen Ausführungsformen kann der Verriegelungsarm 5 aber auch als zusätzliches Steckteil ausgeführt sein oder über ein Scharnier oder Filmscharnier mit dem Hauptkörper 3 verbunden sein. Der Hauptkörper 3 dient zur Aufnahme einer Ferrule 16, die mit einer Feder 18 im Hauptkörper 3 gelagert ist. Der Hauptkörper kann dafür auch einen Ferrulenhalter 13 aufweisen. So ist die Ferrule in Axialrichtung innerhalb des Hauptkörpers 3 bewegbar, gleichzeitig vorzugsweise aber bspw. durch eine sechskantige Außenform (oder eine andere mehrkantige Außenform wie z.B. eine vierkantige)am Ferrulenhalter und am Hauptkörper gegen Verdrehen gesichert. So kann eine Beschädigung durch versehentliches Eindrücken der Ferrule wird vermieden werden. Der Ferrulenhalter 13 ist dabei bewegungsfest mit dem Hauptkörper verbunden. Am hinteren Ende des Hauptkörpers 3 sitzt ein Verbindungsbereich 15, an dem ein Kabel, wie beispielsweise ein Lichtwellenleiterkabel, befestigt werden kann. Der Verbindungsbereich kann in der gezeigten Ausführungsform also als Kabelanschluss 15 bezeichnet werden. Eine Verbindung mit einem Kabel kann über eine Krimpverbindung (in Figur 1 angedeutet), eine Schraubverbindung oder andere geläufige Befestigungsarten geschehen.

Der Hauptkörper 3 und/oder der Ferrulenhalter 13 weisen zumindest eine Aussparung 10 auf, die an einem unteren Ende der Steckverbindung 1 in einem Bereich vorgesehen ist, in dem auf der Oberseite das Ende des Verriegelungsarms vorgesehen ist. Da der Verriegelungsarm 5 sich nach oben erstreckt und insbesondere durch eine radiale Ausgestaltung ein sogar im Wesentlichen senkrecht nach oben stehendes Ende 9 aufweisen kann, ist die Aussparung 10 dafür vorgesehen, dass es dieses Ende 9 aufnehmen kann. Es ist auch möglich, dass der Hauptkörper so kurz ausgeführt ist, dass er im Bereich des Endes des Verriegelungsarms nicht mehr vorhanden ist, dann weist zumindest der Kabelanschluss eine Aussparung 10 auf. Ebenso kann der Verschiebeelement 4, insbesondere wenn als den Hauptkörper zumindest teilweise umschließendes Element ausgebildet ist, auch eine Aussparung aufweisen um die Aussparung 10 nicht aus Versehen abzudecken. Die Aussparung 10 kann sich in Radialrichtung durch den gesamten Hauptkörper erstrecken wie es in Figur 1 gezeigt ist. An der gleichen Stelle kann auch der Kabelanschluss eine zusätzliche Aussparung aufweisen (in Figur 1 nicht gezeigt). Vorzugsweise ist die Aussparung in Axialrichtung zumindest 1 mm länger, als die Dicke des Verriegelungsarms 5 in Axialrichtung an seinem Ende 9, so dass der Verriegelungsarm 5 insbesondere jeweils 0,5 mm nach vorne und nach hinten in seiner Ruheposition als Toleranzabstand zu den jeweiligen Aussparungswänden aufweist.

In der bevorzugten Ausführungsform ist der Verriegelungsarm 5 federelastisch, so dass er selbstständig in seine Verriegelungsposition zurückkehrt. Der Verriegelungsarm weist zwei Verriegelungsvorsprünge 7 auf, die mit entsprechenden Vorsprüngen in einer Buchse oder einer Kupplung 2 zusammenwirken und deren Ausgestaltung durch die Maße eines LC-Steckers oder anderer herkömmlicher genormten Steckverbindungen festgelegt ist. Der Verriegelungsarm 5 weist an seinem hinteren Ende, das schräg nach oben weg steht, einen Radius 9 auf. Der Radius 9 ist vorzugsweise ein abgerundeter Radius, kann aber auch aus einer Vielzahl von kleinen Flächen bestehen, die polygonartig aneinander anliegen. Wichtig ist jedoch, dass die Winkel stumpfe Winkel sind, vorzugsweise in einem Bereich von 150° bis 180° (gemessen zwischen zwei oberen Flächen der anliegenden Flächen), so dass bspw. ein Bügel 6 des Verschiebeelements 4 nicht an diesen Flächenkanten des Radius verkanten kann. Ein leichtes Öffnen des Verriegelungsarms 5 durch das nach hinten Ziehen des Verschiebeelements 4 sollte möglich bleiben.

In den in den Figuren gezeigten Ausführungsformen ist das Verschiebeelement 4 als ein den Hauptkörper 3 zumindest teilweise umschließendes Element ausgebildet. Vorzugsweise ist es an der Unterseite in Längsrichtung zumindest abschnittsweise, insbesondere jedoch durchgängig geöffnet. Zum Einen dient dies dazu die Aussparung des Hauptkörpers nicht aus Versehen abzudecken, zum anderen kann damit auch eine leichtere Montage und Demontage des Verschiebeelements 4 vom Hauptkörper 3 ermöglicht werden. Das Verschiebeelement kann jedoch auch weiter hinten über dem Kabel oder dem Kabelanschluss 13 angebracht sein, sofern dieser aus dem Hauptkörper 3 herausragt. Das Verschiebeelement 4 kann auch in Radialrichtung nach innen gerichtete Vorsprünge aufweisen, die in sich in Axialrichtung erstreckenden Aussparungen im Hauptkörper 3 oder im Kabelanschluss 13 laufen. Dadurch wird eine genauere Führung des Verschiebeelements 4 erreicht.

Das Verschiebeelement 4 weist in der bevorzugten Ausführungsform einen Bügel 6 auf, der insbesondere durchgehend ausgebildet ist (siehe Figur 2). Es reichen jedoch auch Vorsprünge, die in Richtung des Verriegelungsarms 5 nach innen hervorstehen. Ein durchgängiger Bügel 6 stellt jedoch eine stabilere Konstruktion dar und ist widerstandsfähiger gegenüber Beschädigungen, so dass der Bügel 6 beispielsweise schwerer abbrechen kann. Das Verschiebeelement 4 kann mit dem Verriegelungsarm 5 auch über eine Brücke (nicht gezeigt) verbunden sein, der sowohl mit dem Verriegelungsarm als auch mit dem Verschiebeelement insbesondere einstückig verbunden ist. In diesem Fall sollte die Verbindung mit dem Verriegelungsarm 5 jedoch am oberen Ende 9 des Verriegelungsarms 5 vorgesehen sein, damit der Wirkungsgrad und das Herunterziehen des Verriegelungsarms 5 einwandfrei möglich ist. Solche Verbindungen sind in den oben genannten Dokumenten WO 1609/135787 A1 und US 7,326,075 B1 erläutert. Das Verschiebeelement 4 kann durch den Verriegelungsarm 5 in seine Verriegelungsposition gezogen werden, kann aber auch mit einer Federvorrichtung am Kabelanschluss und/oder am Hauptkörper gelagert sein, der es in seine Verriegelungsposition drängt. Das Verschiebeelement 4 kann aber auch einfach in Axialrichtung lose angebracht sein.

Der Hauptkörper und/oder das Verschiebeelement können Vorsprünge aufweisen, die als Anschläge (nicht gezeigt) dienen und die eine Bewegung in Axialrichtung beschränken. Insbesondere kann ein Anschlag am Verriegelungsarm 5 ausgebildet sein, so dass verhindert wird, dass der Bügel 6 über den Verriegelungsarm 5 bzw. das Ende 9 hinaus abrutschen kann. Damit wird verhindert, dass das Verschiebeelement 4 versehentlich von der Steckverbindung gelöst wird, es wird aber ermöglicht, ihn manuell durch Herunterdrücken des Verriegelungsarms zu lösen, was mit fest eingegossenen Anschlägen sich schwieriger gestaltet.

Der Verriegelungsarm 5 kann auch mit Hilfe einer separaten Feder (nicht gezeigt) nach oben gedrückt werden. Dies ist auch als Unterstützung der dem Verriegelungsarm vorzugsweise eigenen Elastizität/Federeigenschaft möglich.

## Patentansprüche

1. Steckverbindung (1), insbesondere für optische Stecker, umfassend
einen Hauptkörper (3) mit einer Längsachse, der für die Aufnahme einer Ferrule (11) vorgesehen ist, wobei der Hauptkörper (3) einen Verriegelungsarm (5) aufweist, der mit dem Hauptkörper (3) an zumindest einem vorderen Bereich verbunden ist und sich entlang der sich Längsachse des Hauptkörpers (3) nach hinten erstreckt;
ein Verschiebeelement (4), das in Axialrichtung relativ zum Hauptkörper (3) bewegbar ist und mit dem Verriegelungsarm (5) derart zusammenwirkt, dass eine Betätigung des Verschiebeelements (4) den Verriegelungsarm (5) aus der Verriegelung löst; und
einen Kabelanschluss (15), der am Hauptkörper (3) angeordnet ist und der zum befestigen eines Kabels vorgesehen ist;
**dadurch gekennzeichnet, dass**
die Steckverbindung auf der dem Verriegelungsarm (5) gegenüberliegenden Seite im Bereich des Endes (9) des Verriegelungsarms (5) zumindest eine Aussparung (10) aufweist, in die zumindest das Ende des Verriegelungsarms (5) einer benachbarten Steckverbindung aufnehmbar ist.

2. Steckverbindung (1) nach Anspruch 1, bei dem das Verschiebeelement (4) den Hauptkörper in Umfangsrichtung zumindest teilweise umschließt.

3. Steckverbindung nach Anspruch 2, bei dem das Verschiebeelement (4) derart ausgebildet ist, dass es eine Vielzahl Hauptkörper (3) aufnimmt.

4. Steckverbindung (1) nach einem der vorhergehenden Ansprüche, bei dem das Verschiebeelement (4) einen Bügel (6) oder zumindest einen Vorsprung umfasst, der mit dem Ende des Verriegelungsarms (5) zusammenwirkt.

5. Steckverbindung (1) nach einem der vorhergehenden Ansprüche, bei der das Ende (9) des Verriegelungsarms auf der Oberseite einen nach oben verlaufenden Radius aufweist, mit dem das Verschiebeelement (4) zusammenwirkt.

6. Steckverbindung (1) nach einem der vorhergehenden Ansprüche, bei der der Verriegelungsarm (5) elastisch ausgebildet ist, so dass er ohne Einwirkung äußerer Kräfte in seine Verriegelungsposition zurückkehrt.

7. Steckverbindung (1) nach einem der vorhergehenden Ansprüche, bei dem der Hauptkörper (3) und/oder das Verschiebeelement (4) Anschläge aufweisen, die eine Bewegung des Verschiebeelements (4) relativ zum Hauptkörper (3) in Axialrichtung begrenzen.

8. Steckverbindung (1) nach einem der vorhergehenden Ansprüche in Verbindung mit Anspruch 4, bei dem der Bügel (6) zusammen mit dem Verriegelungsarm (5) als Anschlag wirkt.

9. Steckverbindung (1) nach einem der vorhergehenden Ansprüche, bei dem der Verriegelungsarm (5) das Verschiebeelement (4) in die Verriegelungsposition zieht.

10. Steckverbindung (1) nach einem der vorhergehenden Ansprüche, bei dem das Verschiebeelement (4) mit einer Federvorrichtung am Hauptkörper (3) und/oder am Kabelanschluss(15) und/oder am Ferrulenhalter (13) gelagert ist.

11. Steckverbindung (1) nach einem der vorhergehenden Ansprüche, bei dem die Aussparung (10) als Loch in Radialrichtung im Hauptkörper (3) ausgestaltet ist.
